**Europäisches Patentamt**

**European Patent Office**

**Office européen des brevets**

(19)

(11) Veröffentlichungsnummer: **0 280 030**
**B1**

(12) **EUROPÄISCHE PATENTSCHRIFT**

(45) Veröffentlichungstag der Patentschrift:
**22.11.90**

(51) Int. Cl.⁵: **F16C 17/22**

(21) Anmeldenummer: **88100707.4**

(22) Anmeldetag: **20.01.88**

(54) **Adapterteil.**

(30) Priorität: **27.02.87 DE 3706365**

(43) Veröffentlichungstag der Anmeldung:
**31.08.88 Patentblatt 88/35**

(45) Bekanntmachung des Hinweises auf die Patenterteilung:
**22.11.90 Patentblatt 90/47**

(84) Benannte Vertragsstaaten:
**DE FR GB IT SE**

(56) Entgegenhaltungen:
**CH-A- 435 871**
**DE-C- 513 157**
**GB-A- 831 320**
**US-A- 2 512 556**

**SOVIET INVENTIONS ILLUSTRATED, SECTION MECHANICAL, WOCHE 8701, Q62, 7. JANUAR 1987, DERWENT PUBLICATIONS LTD., ABSTRACT NR. 87-005500/01;**

(73) Patentinhaber: **GKSS-FORSCHUNGSZENTRUM GEESTHACHT GMBH, Max-Planck-Strasse, D-2054 Geesthacht-Tesperhude(DE)**

(72) Erfinder: **Seibig, Bernd, Strandweg 17, D-2054 Geesthacht(DE)**
Erfinder: **Reymann, Alfred, Am Hang 16, D-2054 Geesthacht(DE)**
Erfinder: **Dittmer, Helmut, Bleckede Nr. 9, D-2122 Niendorf(DE)**

(74) Vertreter: **Schöning, Hans-Werner, Dipl.-Ing. et al, Patentanwälte Niedmers & Schöning Jessenstrasse 4, D-2000 Hamburg 50(DE)**

## Beschreibung

Die Erfindung betrifft ein Adapterteil zur Herstellung einer spielfreien und zentrierten Aufnahme von Maschinenelementen, die über weite Temperaturbereiche unterschiedliche Wärmeausdehnung aufweisen, wobei das Adapterteil hülsenförmig ausgebildet ist und zungenartige Bereiche aufweist, die am Hülsenmantel in Umfangsrichtung angeordnet sind.

Ein Adapterteil dieser Art ist bekannt (US-A 2 512 556). Mit dem bekannten Adapterteil soll eine selbsttätige Querausdehnung um eine durch das Adapterteil hindurchgehende Längsachse, beispielsweise in Folge einer Temperaturerhöhung des im Adapterteil aufgenommenen Maschinenelements, das z.B. eine Welle sein kann, möglich sein. Grundsätzlich bildet die Temperaturkompensation an Maschinenelementen, insbesondere an Bestandteilen von Lagern, dann ein technisches Problem, wenn weite Temperaturbereiche im Betriebszustand umfaßt werden sollen und die Maschinenelemente aus Materialien bestehen, die extrem unterschiedliche Dehnungseigenschaften aufweisen. Solche praktisch unüberwindlichen Schwierigkeiten traten bisher insbesondere an Gleitlagern aus Metall-Keramikverbindungen z.B. von Kühlmittelumwälzpumpen (Spaltrohrmotorpumpen) auf. Die Betriebstemperaturen umfaßten hierbei einen Bereich von 20 bis 320°C. Ähnlich geartete Probleme treten bei der Konstruktion von Apparaten der Tief- und Hochtemperaturtechnik auf. Einfache technische Lösungen, was gleichermaßen für das bekannte Adapterteil gilt, erbrachten nicht den gewünschten Erfolg, die eingesetzten Metall-Keramikverbindungen vor der Zerstörung durch die in radialer Richtung wirkenden temperatur- und dehnungsabhängigen Kräfte zu schützen.

Im weiteren zeigte sich, daß zu großzügig bemessene Toleranzvorgaben ebenfalls zur vorzeitigen Zerstörung der Lager führten, ausgelöst durch nun auftretende starke Eigenschwingungen der Rotorwelle.

Als Kompromißlösung konnte daher allgemein zu- oder abnehmendes Spiel nicht in Kauf genommen werden. Auch Toleranzringe brachten nicht die geforderten Spezifikationen wegen zu geringer Temperaturbereichsgröße. Des weiteren entsprachen sie nicht den Anforderungen an die Zentrierung (konzentrische Anordnung) der Metall-Keramikverbindung zur Rotorwelle.

Es ist Aufgabe der vorliegenden Erfindung ein Adapterteil zu schaffen, mit dem eine spielfreie und zentrierte Aufnahme von Werkstoffen, insbesondere von sich gegeneinander bewegenden Teilen mit unterschiedlichen Wärmedehnungen bei Temperaturen vom Tieftemperaturbereich in der Kältetechnik bis ca. 600°C im Hochtemperaturbereich erlaubt ist.

Gelöst wird die Aufgabe gemäß der Erfindung dadurch, daß abgeflachte Bereiche vorgesehen sind, die sich längs der Innen- und/oder der Außenmantelfläche erstrecken und zumindest Teile der zungenartigen Bereiche miterfassen.

Die übrigen Ansprüche geben vorteilhafte Weiterbildungen der Erfindung an.

Die besonderen Vorteile, die mit dem erfindungsgemäßen Adapterteil erzielt werden, liegen darin, daß durch die Hinterfräsung und die z. B. elektroerosiv erzeugten, am Umfang der Buchse liegenden U-förmigen Zungen eine temperaturabhängige Durchmesseränderung z. B. einer Welle-Buchseverbindung kompensiert wird. Die konstruktiv beeinflußbaren Federkräfte der tragenden Zungen ermöglichen demnach eine temperaturunabhängige, spielfreie Verbindung von nahezu unbegrenzter Lebensdauer.

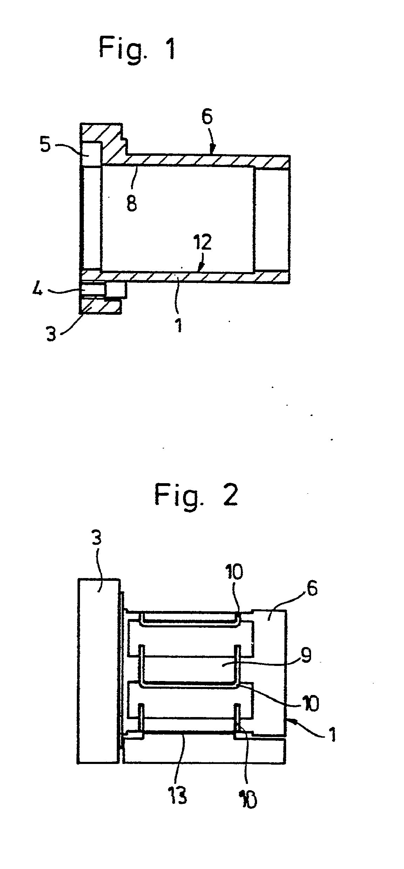

Die Erfindung wird im folgenden anhand eines besonders ausgewählten Ausführungsbeispiels mittels der Fig. 1 - 3 näher dargestellt.

Probleme mit der internen Kühlmittelumwälzpumpe, einer Spaltrohrmotorpumpe, die Kühlwasser von 320° bei 150 bar umwälzt, machten eine ständige Weiterentwicklung dieser Komponente erforderlich. Ein besonderer Schwerpunkt lag in der Auswahl eines geeigneten Lagerwerkstoffs und in der Verbesserung des konstruktiven Aufbaus des Lagers.

Es wurden Versuche mit den Lagerpaarungen Kohle/$Cr_2O_3$, $ZrO_2$/$ZrO_2$, $Al_2O_3$/$Cr_2O_3$ und Kugellager aus Edelstahl durchgeführt, ohne jedoch ausreichende Standzeiten zu erreichen. Schon hier traten Probleme mit der Aufnahme der Keramik-Lagerteile auf. Bei einer optimalen Lagerpaarung mit Siliziumkarbid (SiC) gegen SiC, die eine besonders lange Lebensdauer erwarten lassen sollte, führte eine ungeeignete Aufnahme der Lagerteile innerhalb von 100 Betriebsstunden zu einer vollständigen Zerstörung der Lager.

Dieser Fehlschlag führte zur Entwicklung des erfindungsgemäßen Adapterteils, das die unterschiedliche Wärmeausdehnung von Metall und Keramik kompensiert und eine spielfreie und zentrierte Aufnahme des Keramikteils gewährleistet.

Es mußte in diesem Fall die Wärmeausdehnung der Pumpenwelle aus Edelstahl, auf der die Lagerlaufbuchse aus SiC angebracht war, über den Temperaturbereich von 20 - 320° C kompensiert werden. Mit dem entwickelten Adapterteil gelang diese Kompensation.

Die erste mit dem erfindungsgemäßen Adapterteil ausgerüstete Pumpe erreichte ca. 3000 Betriebsstunden. Eine weitere Pumpe ist noch in Betrieb und läuft bereits über 6000 Stunden ohne Lagerschaden. Auch viele An- und Abfahrvorgänge beeinträchtigten das Laufverhalten der Pumpe nicht.

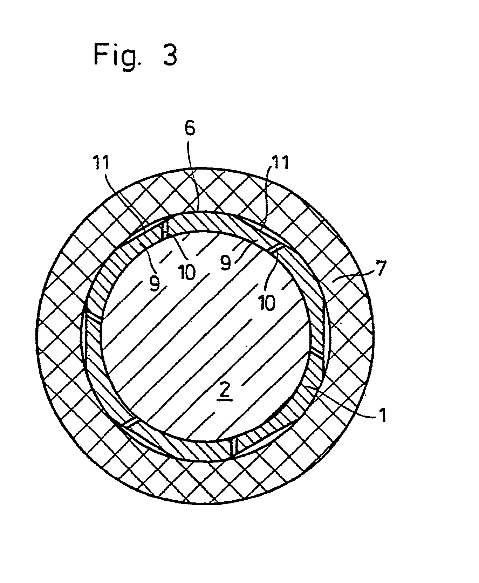

Das Adapterteil wird von einer Lagerbundhülse 1 gebildet, die im Schnitt in Fig. 1 dargestellt ist. Ihre Innenmantelfläche sitzt auf der Oberfläche eines Wellenendes 2 (siehe Fig. 3) passend auf, wobei sowohl die Lagerbundhülse 1 als auch die Welle 2 aus dem gleichen Material, z. B. Edelstahl, bestehen. Am einen Ende der Lagerbundhülse 1 ist ein Flansch 3 vorgesehen, der an nicht näher dargestellten Wellenteilen über Stiftverbindungen (Ausnehmungen 4 bzw. 5) arretierbar ist. Auf der Außenmantelfläche 6 sitzt die Lagerbuchse 7 (s. Fig. 3) aus Keramik (SiC) auf.

Die Fig. 2 zeigt einen Blick auf die Mantelfläche 6 der Lagerbundhülse 1. Aus dem Mantel (Hülse) sind zungenartige Bereiche 9 durch Herstellung U-förmiger Nuten 10 (Laserstrahlbeschuß) herausgeprägt worden. Weitere Bereiche der Außenmantelfläche 6 sind abgeflacht, so daß sie Ebenen 11 gemäß Fig. 3 bilden, die von Mantellinien und Sekanten begrenzt werden. Diese ebenen Bereiche 11 erstrecken sich mindestens über die Breite der Zungen 9. Die nichtabgeflachten Bereiche bilden weiterhin die Außenmantelfläche 6 welche zur Anlage an die Lagerbuchse 7 kommt. Zwischen Welle 2 und Adapterteil besteht ein Spalt bis zum Erreichen der Solltemperatur. In den Zungenbereichen ist der Innendurchmesser vergrößert.

Vorzugsweise sind sechs Zungen 9 als Federelemente am Umfang der Lagerbundhülse 1 angeordnet. Sie dehnen sich bis zur Betriebstemperatur nicht aus und sind durch die Nuten 10 von den sich ausdehnenden Teilen getrennt. Die Dickenzunahme dieser Federelemente 9 wird durch Maßvorgabe der Trägereinheit ausgeglichen. Sie kann aber, wie in Fig. 1 dargestellt, durch eine Hinterdrehung 12 im Zungenbereich kompensiert werden. Aus diesem Grunde darf das aufgenommene Bauteil aus Keramik nur im Bereich 13 der Zungen liegen, wie in Fig. 2 ersichtlich ist. Die Anlage zum Betriebspunkt kann vorgegeben werden. Die Abmessungen der U-förmigen Nuten 10 Länge, Breite), der somit gebildeten Zungen 9 (Länge, Breite), der abgeflachten Bereiche 11 und somit der verbleibenden Außenmantelflächenbereiche können experimentell, aber auch rechnerisch bestimmt werden. Sie hängen auch von den Betriebsparametern (Temperatur, Kräfte) und von der Materialauswahl (Lager, Welle) ab. Die abgeflachten Bereiche 11 erstrecken sich wahlweise auch längs der Innenmantelfläche 8 oder können sich sowohl längs der Innen- als auch der Außenmantelfläche erstrecken. Die abgeflachten Bereiche 11 an der Innenmantelfläche 8 der Lagerbundhülse 1 anzubringen ist dann sinnvoll, wenn z.B. das innere Maschinenelement feststeht.

## Patentansprüche

1. Adapterteil (1) zur Herstellung einer spielfreien und zentrierten Aufnahme von Maschinenelementen (2), die über weite Temperaturbereiche unterschiedliche Wärmedehnungen aufweisen, wobei das Adapterteil (1) hülsenförmig ausgebildet ist und zungenartige Bereiche (9) aufweist, die am Hülsenmantel in Umfangsrichtung angeordnet sind, dadurch gekennzeichnet, daß abgeflachte Bereiche (11) vorgesehen sind, die sich längs der Innen (8)- und/oder der Außenmantelfläche (6) erstrecken und zumindest Teile der zungenartigen Bereiche (9) miterfassen.

2. Adapterteil nach Anspruch 1, dadurch gekennzeichnet, daß die abgeflachten Bereiche Ebenen (11) darstellen, die von Mantellinien und Sekanten begrenzt werden.

3. Adapterteil nach Anspruch 1 und 2, dadurch gekennzeichnet, daß die abgeflachten Teile (11) die freien Enden der zungenartigen Bereiche (9) überdecken.

4. Adapterteil nach Anspruch 1 bis 3, gekennzeichnet durch seine Verwendung als Lagerbundhülse zwischen einer Welle (2) aus z. B. Metall und einer Lagerbüchse (7) aus z. B. Keramik.

5. Adapterteil nach Anspruch 1 oder einem der folgenden, gekennzeichnet durch seine Verwendung als Lagerbundhülse (1) von Lagern in Kühlmittelumwälzpumpen.

## Claims

1. An adaptor element (1) for establishing a clearance-free and centred housing of machine elements (2) the heat expansion rates of which vary over wide temperature ranges, the adaptor element (1) being of sleeve-like construction and having tongue-like zones (9) disposed in a peripheral direction around the sleeve shell, characterised in that flattened areas (11) are provided which extend along the inside (8) and/or outside shell face (6) and which also cover at least parts of the tongue-like zones (9).

2. An adaptor element according to claim 1, characterised in that the flattened zones constitute planes (11) bounded by generatrices and secants.

3. An adaptor element according to claim 1 and 2, characterised in that the flattened parts (11) cover the free ends of the tongue-like zones (9).

4. An adaptor element according to claim 1 to 3, characterised in that by its use as a bearing collar sleeve between a shaft (2) of for instance metal and a bearing bush (7) of for example ceramic material.

5. An adaptor element according to claim 1 or one of the subsequent claims characterised by its use as a bearing collar sleeve (1) for bearings in coolant circulating pumps.

## Revendications

1. Pièce formant adaptateur (1) servant à loger, sans jeu et d'une manière centrée, des organes de machine (2), qui présentent des dilatations thermiques différentes dans des gammes étendus de températures, la pièce formant adaptateur (1) étant réalisée sous la forme d'une douille et comportant des parties en forme de languettes (9), qui sont disposées sur l'enveloppe de la douille dans la direction circonférentielle, caractérisée en ce qu'il est prévu des zones aplaties (11) qui s'étendent le long de la surface enveloppe intérieure (8) et/ou de la surface enveloppe extérieure (6) et déterminent conjointement au moins des parties des zones (9) en forme de languettes.

2. Pièce formant adaptateur selon la revendication 1, caractérisée en ce que les zones aplaties représentent des plans (11), qui sont limités par des génératrices et des sécantes.

3. Pièce formant adaptateur selon les revendications 1 et 2, caractérisée en ce que les parties aplaties (11) recouvrent les extrémités libres des zones (9) en forme de languettes.

4. Pièce formant adaptateur selon les revendications 1 à 3, caractérisée par son utilisation en tant que douille à collet de palier contre un arbre (2), réalisé par exemple en un métal, et un coussinet de palier (7) formé par exemple d'une céramique.

5. Pièce formant adaptateur selon la revendication 1 ou l'une des suivantes, caractérisée par son utilisation en tant que douille à collet (1) de paliers dans des pompes de recirculation d'un réfrigérant.

## Fig. 1

## Fig. 2

Fig. 3